# EUROPÄISCHE PATENTANMELDUNG

(11) **EP 2 884 321 A1**
(43) Veröffentlichungstag der Anmeldung: **17.06.2015**
(21) Anmeldenummer: 14196272.0
(22) Anmeldetag: 04.12.2014
(51) Int. Cl.: G02B 7/02, B60R 11/04, H04N 5/225

(54) **Kamera mit Objektivbefestigung**

(30) Priorität: 13.12.2013 DE 102013020574
(71) Anmelder: MEKRA LANG GmbH & Co. KG, 91465 Ergersheim (DE)
(72) Erfinder: Lang, Werner, 91465 Ergersheim (DE); Deffner, Simon, 91604 Flachslanden (DE); Geissendörfer, Peter, 91465 Ergersheim (DE); Stürzenhofecker, Jens, 91459 Markt Erlbach (DE)
(74) Vertreter: Kramer Barske Schmidtchen Patentanwälte PartG mbB

(57) **Zusammenfassung**

Die vorliegende Anmeldung betrifft eine Kamera (10) zur Verwendung an Fahrzeugen, insbesondere Nutzfahrzeugen, und ein Verfahren zum Herstellen einer solchen Kamera (10). Die Kamera (10) weist ein Gehäuse (12), das im Inneren einen Aufnahmebereich (14) aufweist, zumindest ein im Aufnahmebereich (14) angeordnetes optisches Element (18) und eine aktivierte bzw. aktivierbare Beschichtung (40) auf. Die aktivierte bzw. aktivierbare Beschichtung (40) ist zwischen dem zumindest einen optischen Element (18) und dem Gehäuse (12) vorgesehen und wird beim Einbauen des zumindest einen optischen Elements (18) in das Gehäuse (12) mechanisch aktiviert. Dabei wird das zumindest eine optische Element (18) in einer vorbestimmten Position im Gehäuse (12) befestigt.

## Beschreibung

Die vorliegende Erfindung betrifft eine Kamera mit einer Objektivbefestigung, insbesondere eine Kamera mit einer aktivierten Beschichtung zur Objektivbefestigung zur Verwendung an einem Fahrzeug, z. B. einem Nutzfahrzeug.

In letzter Zeit ist es zunehmend angedacht, neben herkömmlichen Spiegeln als Einrichtungen zur indirekten Sicht entweder in Ergänzung oder als Ersatz für die Spiegel Kamerasysteme bzw. Bildaufnahmesysteme als Einrichtungen zur indirekten Sicht einzusetzen, bei denen eine Bildaufnahmeeinheit, wie beispielsweise eine Kamera, ein Aufnahmebild kontinuierlich erfasst, diese von der Bildaufnahmeeinheit erfassten (Video-)Daten, beispielsweise mittels einer Berechnungseinheit und gegebenenfalls nach Weiterbearbeitung, an eine im Fahrerhaus befindliche Wiedergabeeinrichtung geliefert werden, welche für den Fahrer dauerhaft und in Echtzeit und jederzeit einsehbar den entsprechend erfassten Sichtbereich und gegebenenfalls ergänzende Information, wie z. B. Kollisionshinweise, Abstände und Ähnliches, für den Bereich rund um das Fahrzeug darstellt.

Kameras weisen üblicherweise ein Gehäuse mit einem darin angeordneten Bildsensor und einem optischen Element, beispielsweise einem Objektiv, auf. Damit ein Aufnahmebild mit gewünschter Qualität erfasst werden kann, muss das optische Element zum Bildsensor fokussiert, ausgerichtet, fixiert und abgedichtet werden. Dabei beschreibt die Fokussierung des optischen Elements die Einstellung des Abstandes zwischen der letzten optischen Fläche zur Bildebene des Bildsensors, so dass eine gewünschte Bildschärfe erreicht wird. Die Ausrichtung des optischen Elements hingegen beschreibt die Einstellung der optischen Achse des optischen Elements relativ zum Bildsensor. Ist das optische Element bezüglich des Bildsensors fokussiert und ausgerichtet, muss das optische Element in dieser gewünschten Position im Gehäuse fixiert und gegen das Eindringen von Staub, Wasser, Wasserdampf und anderen Fremdkörpern abgedichtet werden, insbesondere im Bereich zwischen Objektiv und Bildsensor. Der Bereich zwischen dem optischen Element und dem Bildsensor beschreibt den optischen Pfad.

Zur Fokussierung des optischen Elements relativ zum Bildsensor ist bekannt, das optische Element in das Gehäuse über ein Gewinde einzuschrauben, so dass der Abstand zwischen optischem Element und Bildsensor wie gewünscht eingestellt werden kann. Zur Ausrichtung der optischen Achse des optischen Elements relativ zum Bildsensor wird im Stand der Technik die Halterung des optischen Elements verschoben oder das optische Element in der Halterung verschoben und verschwenkt. Sind die Schritte des Fokussierens und Ausrichtens abgeschlossen, wird daraufhin das Gewinde verklemmt, eine auf das optische Element wirkende Klemmschraube vorgesehen oder das optische Element durch Aufdosieren eines zusätzlichen Klebers, beispielsweise eines einkomponentigen, zweikomponentigen oder UV-Klebers, im Gehäuse eingeklebt und fixiert. Zur Abdichtung wird beispielsweise ein Dichtring zwischen dem optischen Element und der Halterung bzw. dem Gehäuse vorgesehen. Alternativ wird zur Abdichtung zwischen dem optischen Element und der Halterung bzw. dem Gehäuse ein abdichtender Kleber oder eine Dichtraupe vorgesehen.

Die Herstellung einer Kamera mit gewünschter Fokussierung, Ausrichtung, Fixierung, und Abdichtung ist oftmals verhältnismäßig aufwändig und erfordert, wie oben beschrieben, viele einzelne und aufwändige Fertigungsprozesse. Dabei kommen jedem Fertigungsschritt zugelassene Toleranzen zu, die in Summe zu einem unbefriedigenden Ergebnis bezüglich der Anordnung des optischen Elements relativ zum Bildsensor führen können.

Aus der DE 103 42 529 A1 ist eine Kameraanordnung bekannt, insbesondere zur Verwendung in einem Kraftfahrzeug. Die Kameraanordnung umfasst eine Objektivaufnahme und ein Objektiv, die zusammen ein Kugelgelenk bilden. Alternativ oder zusätzlich weist die Objektivaufnahme drei ringförmige, konzentrisch angeordnete Führungsbahnen mit jeweils einem Gewindegang auf. In den Führungsbahnen liegt jeweils wenigstens ein Lager des Objektivs auf.

Die DE 33 27 102 A1 offenbart ein Verfahren zum Zentrieren von Lichtwellenleitern in Verbindungsstücken. Die Zentrierung erfolgt über die Faseraußenkontur durch gezielte Strömung des Klebstoffs. Am Umfang einer Bohrung, in die der Lichtwellenleiter eingelegt ist, sind gerade, axiale Fließkanäle symmetrisch angebracht.

Aus der DD 273 905 A1 ist eine Klebeverbindung zur Lagefixierung optischer Bauelemente in mechanischen Fassungen, insbesondere von Linsen oder Linsengruppen, die in den mechanischen Fassungen spannungsarm definiert fixiert werden sollen, bekannt.

Davon ausgehend ist es Aufgabe der Erfindung eine Kamera bereitzustellen, bei der das optische Element zum Bildsensor wie gewünscht fokussiert, ausgerichtet, fixiert und abgedichtet ist, während eine kostengünstige und einfache Herstellung gewährleistet ist.

Diese Aufgabe wird mit einer Kamera mit den Merkmalen des Anspruchs 1 und einem Verfahren zum Herstellen einer Kamera mit den Schritten des Anspruchs 8 gelöst. Bevorzugte Ausführungsformen sind in den abhängigen Ansprüchen angegeben.

Der Erfindung liegt der Gedanke zugrunde, eine Kamera zur Verwendung an Fahrzeugen, insbesondere Nutzfahrzeugen, vorzusehen, die eine Haltevorrichtung bzw. ein Gehäuse, das im Inneren einen Aufnahmebereich aufweist, zumindest ein im Aufnahmebereich angeordnetes optisches Element und eine beim Zusammenbauen der Kamera aktivierte Beschichtung aufweist. Die aktivierte Beschichtung ist zwischen dem zumindest einem optischen Element und dem Gehäuse vorgesehen und wird beim Einbauen des zumindest einen optischen Elements in das Gehäuse erst dann mechanisch aktiviert, wenn sich das optische Element relativ zu einer im Gehäuse angeordneten digitalen Bilderfassungseinheit in einer vorbestimmten Position befindet. Somit wird das zumindest eine optische Element in einer vorbestimmten Position im Gehäuse bzw. der Haltevorrichtung befestigt. Durch die aktivierte Beschichtung kann das optische Element durch einen einzigen Fertigungsschritt bezüglich der digitalen Bilderfassungseinheit fokussiert, ausgerichtet, befestigt und/oder abgedichtet werden. Dies führt zu einem vereinfachten Herstellungsprozess und niedrigeren Herstellungskosten.

Gemäß der vorliegenden Offenbarung ist unter dem Begriff "aktivierte Beschichtung" bzw. "aktivierbare Beschichtung" eine Beschichtung zu verstehen, die nach dem Einbaus des optischen Elements im Aufnahmebereich des Gehäuses aktiviert wird und dabei das optische Element im Gehäuse in der vorbestimmten Position fixiert und eine Abdichtung zwischen den Fügeflächen des optischen Elements und des Gehäuses bereitstellt. Die aktivierte oder aktivierbare Beschichtung ist beispielsweise eine mikroverkapselte Beschichtung, beispielsweise ein mikroverkapseltes, hoch reaktives Dicht- und Sicherungsmittel. Die mikroverkapselte Beschichtung wird vorzugsweise vor der Montage auf das optische Element und/oder im Gehäuse am Aufnahmebereich aufgebracht und enthält zwei reaktive Komponenten, die in einem Bindemittel eingebettet sind. Beim Anbringen des optischen Elements im Aufnahmebereich brechen die Mikrokapseln auf und das Dicht- und Sicherungsmittel polymerisiert, härtet oder trocknet aus. Somit ist das optische Element relativ zum Gehäuse in der vorbestimmten Position fixiert und abgedichtet. Die Aktivierung der aktivierbaren Beschichtung erfolgt somit beim Zusammenbau der Kamera durch mechanische Einwirkung. Vor dem Zusammenbau ist die aktivierte Beschichtung somit nicht aktiviert, nach dem Zusammenbau befindet sie sich im aktivierten Zustand. Die Mikrokapseln können in einer Ausgestaltung unter dem durch die Reibung entstehenden Wärmeeinfluss aufplatzen und daraufhin ihre Wirkung des Fixierens und Abdichtens des optischen Elements entfalten.

Die aktivierte bzw. aktivierbare Beschichtung kann in einer anderen Ausgestaltung eine Beschichtung sein, die bei deren Aktivierung einer Volumenänderung, beispielsweise durch Aufschäumung, unterliegt, so dass das optische Element im Aufnahmebereich in der vorbestimmten Position verspannt wird und somit dichtend im Gehäuse angeordnet ist. In einer weiteren Ausgestaltung kann die aktivierte bzw. aktivierbare Beschichtung ein zwischen dem optischen Element und dem Gehäuse eingelegtes Element sein, dass unter mechanischem Einfluss, beispielsweise einer Reibung zwischen dem optischen Element und dem Gehäuse bzw. der Haltevorrichtung, aktiviert wird. Dabei dehnt sich dieses Element aus und fixiert das optische Element im Gehäuse und sieht eine Abdichtung vor.

Durch das Vorsehen der aktivierten bzw. aktivierbaren Beschichtung kann in einem Montageschritt das optische Element im Gehäuse in der vorbestimmten Position befestigt und somit auch relativ zu einer im Gehäuse angeordneten digitalen Bilderfassungseinheit fokussiert, ausgerichtet, fixiert und abgedichtet werden. Dadurch, dass nach der Aktivierung die aktivierte Beschichtung einen etwaigen Leerraum zwischen Gehäuse und optischem Element vollständig ausfüllt, sieht sie neben der Funktion der lagegenauen Fixierung des optischen Elements auch eine zuverlässige Abdichtung vor. Deshalb kann der Produktionsaufwand reduziert werden, da zusätzliche Elemente, wie beispielsweise Dichtringe, entfallen. Aus diesem Grund reduzieren sich auch die Durchlaufzeiten und Anlagenkosten, was zu einer allgemeinen Reduktion der Prozesskosten führt.

In einer bevorzugten Ausgestaltung sind der Aufnahmebereich und das optische Element zylindrisch ausgestaltet. Dabei können der Aufnahmebereich und das optische Element beispielsweise eine kreisförmige, quadratische, rechteckige, dreieckige oder vieleckige Grundfläche aufweisen, wobei die Grundflächen des Aufnahmebereichs und des optischen Elements nicht die gleiche Form haben müssen. Beispielsweise weist der Aufnahmebereich eine quadratische Grundfläche auf und das optische Element eine kreisförmige Grundfläche. Vorzugsweise sind die zylindrischen Durchmesser des Aufnahmebereichs und des optischen Elements derart ausgewählt, dass sich nach Aufbringen der aktivierten bzw. aktivierbaren Beschichtung im Aufnahmebereich und/oder auf dem optischen Element zwischen dem optischen Element und dem Aufnahmebereich im Wesentlichen eine Übermaßpassung ergibt, wenn das optische Element im Aufnahmebereich eingebaut ist. Die aktivierte bzw. aktivierbare Beschichtung ist am optischen Element und/oder am Aufnahmebereich vorgesehen. Beim Einbauen des optischen Elements im Aufnahmebereich wird die Beschichtung durch die Reibung und/oder den Flächendruck zwischen dem Gehäuse und dem optischen Element aktiviert. Im Falle einer mikroverkapselten Beschichtung werden die Kapseln aufgrund des Flächendrucks zwischen dem optischen Element und dem Gehäuse aufgebrochen, so dass das Dicht- und Sicherungsmittel polymerisiert und das optische Element relativ zum Gehäuse in der gewünschten Position fixiert und abgedichtet ist. Im Falle einer der Beschichtung mit Volumenänderung schäumt die Beschichtung bei Aktivierung auf und verspannt das optische Element im Aufnahmebereich des Gehäuses in abdichtender Weise.

In einer weiteren bevorzugten Ausgestaltung sind der Aufnahmebereich und das optische Element konisch ausgestaltet. Vorzugsweise sind die Kegelwinkel des konischen Aufnahmebereichs und des konischen optischen Elements im Wesentlichen gleich, so dass die Mantelflächen der beiden Bauteile in maximalen Flächenkontakt treten können. Die aktivierte bzw. aktivierbare Beschichtung ist am optischen Element und/oder am Aufnahmebereich vorgesehen. Beim Einbauen des optischen Elements im Aufnahmebereich wird die Beschichtung aktiviert. Im Falle einer mikroverkapselten Beschichtung werden die Kapseln aufgrund des Flächendrucks zwischen dem optischen Element und dem Gehäuse aufgebrochen, so dass das Dicht- und Sicherungsmittel polymerisiert und das optische Element relativ zum Gehäuse in der gewünschten Position fixiert und abgedichtet ist. Im Falle einer Beschichtung mit Volumenänderung schäumt die Beschichtung bei Aktivierung auf und verspannt das optische Element im Aufnahmebereich des Gehäuses in abdichtender Weise.

In einer weiteren bevorzugten Ausgestaltung weist das Gehäuse am Aufnahmebereich ein Innengewinde und das optische Element ein mit dem Innengewinde in Eingriff bringbares Außengewinde auf. Die Beschichtung, die vor der Montage auf das Außengewinde des optischen Elements und/oder das Innengewinde am Aufnahmebereich des Gehäuses aufgebracht wird, wird nicht aktiviert, bevor das optische Element in den Aufnahmebereich in die gewünschte und vorbestimmte Position relativ zur digitalen Bilderfassungseinheit eingeschraubt ist. Im Falle einer mikroverkapselten Beschichtung brechen beim Anziehen bzw. Verspannen der Gewindegänge aufgrund der im Gewinde auftretenden Flächenpressung die Mikrokapseln auf und das Dicht- und Sicherungsmittel polymerisiert bzw. härtet und/oder trocknet aus. Somit ist das optische Element relativ zum Gehäuse fixiert und abgedichtet. Die aktivierte bzw. aktivierbare Beschichtung kann die Gewindetoleranzen des Innen- und Außengewindes in radialer und axialer Richtung ausgleichen und ausfüllen, wodurch eine dichte Verbindung zwischen dem optischen Element und dem Gehäuse erzielt wird. Die Größe der Kapseln ist auf den Gewindespalt abzustimmen, da in einem großen Gewinde kleine Kapseln nur in einem unzureichenden Anteil durch die Scherbeanspruchung beim Einschrauben zerbrechen würden. Im Falle einer Beschichtung mit Volumenänderung schäumt die Beschichtung bei Aktivierung auf, beispielsweise bei Überschreiten des Anziehdrehmoments, und das Gewinde wird verspannt.

Anstelle des Einbauens des zumindest einen optischen Elements im Gehäuse kann das zumindest eine optische Element mittels der aktivierten bzw. aktivierbaren Beschichtung in eine Haltevorrichtung eingebaut werden, die wiederum in ein Kameragehäuse eingesetzt oder an der Platine befestigt wird. Die Haltevorrichtung kann ebenfalls mittels einer hierein beschriebenen aktivierten Beschichtung im Kameragehäuse eingebaut und befestigt werden, so dass das zumindest eine optische Element bezüglich der digitalen Bilderfassungseinheit fokussiert, ausgerichtet, fixiert und/oder abgedichtet ist. Die Haltevorrichtung kann dabei beispielsweise an der Platine über eine Verschraubung, Verklebung und/oder Vernietung angebracht sein. Ebenfalls ist eine derartige Befestigung der Halterung im Gehäuse möglich.

In einer weiteren Ausgestaltung ist das zumindest eine optische Element in der vorbestimmten Position im Gehäuse abdichtend befestigt. Dies ist besonders dann vorteilhaft, wenn die Kamera ohne einem Deckglas, das üblicherweise bereits den Aufnahmebereich objektseitig gegen die Umgebung luft- und/oder wasserdicht abdichtet, vorgesehen ist.

Mit einer geeigneten Auswahl der chemischen Zusammensetzung der aktivierten bzw. aktivierbaren Beschichtung kann die Aushärtezeit, die Aktivierungsgeschwindigkeit und/oder die Festigkeit nach der Aktivierung beeinflusst und wie gewünscht eingestellt werden. Demnach kann vorzugsweise die aktivierte Beschichtung, die zum Befestigen des optischen Elements innerhalb des Gehäuses verwendet wird, in Abhängigkeit der Materialen des optischen Element und des Gehäuses ausgewählt werden. Somit sind unterschiedliche Materialien für das optische Element und das Gehäuse und die Halterung möglich, die mittels der aktivierten Beschichtung miteinander verbunden werden können.

Vorzugsweise erstreckt sich die aktivierte bzw. aktivierbare Beschichtung über die gesamte Länge des zumindest einen optischen Elements und/oder des Aufnahmebereichs. In einer anderen Ausgestaltung ist die aktivierte bzw. aktivierbare Beschichtung nur teilweise auf dem optischen Element und/oder dem Aufnahmebereich angebracht. Zusätzlich oder alternativ können mehrere Bereiche des optischen Elements und/oder des Aufnahmebereich mit der aktivierten bzw. aktivierbaren Beschichtung versehen sein.

Mit einer mikroverkapselten Beschichtung ist eine Technik gemeint, mit der feste, flüssige oder gasförmige Stoffe in kleinsten Portionen mit einer Hülle umgeben sind und so immobilisiert werden. Die Mikroverkapselung ist somit eine Form der Einschlussimmobilisierung. Grundsätzlich versteht man also unter Mikroverkapselung das Einbetten mindestens einer Substanz (Wirkstoff) mit Hilfe mindestens einer zweiten Substanz (Hüllmaterial). Erstere kann oft aus verschiedenen Gründen, z. B. Löslichkeit, Reaktivität, Stabilität etc., nicht direkt eingesetzt werden, oder es sollen bestimmte Wirkungen durch die Mikroverkapselung erzielt werden.

Es gibt Matrixverkapselungen und Kern-Hülle-Verkapselungen. Bei der Matrixverkapselung wird der oder die Aktivkomponente(n) mit der Hüllkomponente ("Matrix") homogen vermengt und es entsteht ein Partikel, in dem die Aktivkomponente(n) gleichmäßig verteilt ist. Üblicherweise bestimmt die Freisetzung entweder die Diffusion der Aktivkomponente(n) in die Umgebung oder die Degradationsgeschwindigkeit der Matrix die Freisetzung. Bei der Kern-Hülle-Verkapselung werden die Aktivstoffe ("Kern") mit einem Hüllmaterial umhüllt. Es entsteht eine echte Kapsel mit einer oder mehrere Hüllen, z. B. ein Polymersom. Der Hüllbruch erzeugt in der Regel eine vollständige Freisetzung des Kernmaterials in kurzer Zeit, "Burst" genannt. Es ist aber auch möglich, durch die passende Wahl der Hülle eine extrem langsame Freisetzung zu erzeugen.

Eine mikroverkapselte Beschichtung kann beispielsweise mittels des sogenannten Vertropfungsverfahrens hergestellt werden. Dabei entstehen beim Anlegen einer Schwingung an einem dünnen Flüssigkeitsstrahl (mit Lösung, Sol, Suspension oder Schmelze) regelmäßige Tropfen, die eventuell mit Hilfe einer Hochspannung aufgeladen werden können. Es entstehen dann, durch die physikalischen Abstoßungen der Teilchen bedingt, fast runde Tropfen. Diese können im freien Fall gekühlt (beispielsweise Wachs), getrocknet (z. B. Zucker) oder auch chemischen Reaktionen ausgesetzt werden. Für Systeme, die keine interne Gelierung aufweisen (also z. B. durch Abkühlen verfestigt werden), kommen in der Regel Bindemittel zum Einsatz. Diese verfestigen die Tropfen und können weitere Eigenschaften einbringen, wie z.B. definierte Freisetzungsprofile, zusätzlichen Schutz gegen Umwelteinflüsse oder reaktive Komponenten voneinander trennen (z.B. Sauerstoff von Probiotika o. ä.).

Erfindungsgemäß ist ferner ein Verfahren zum Befestigen von zumindest einem optischen Element in einem Aufnahmebereich eines Gehäuses einer Kamera offenbart. Das Verfahren umfasst zunächst den Schritt des Aufbringens einer aktivierbaren Beschichtung auf das zumindest eine optische Element und/oder den Aufnahmebereich. Daraufhin wird das zumindest eine optische Element im Aufnahmebereich in einer vorbestimmten Position positioniert und dann bzw. gleichzeitig die aktivierbare Beschichtung zum abdichtenden Fixieren des zumindest einen optischen Elements im Gehäuse aktiviert.

Nachfolgend wird die Erfindung beispielhaft anhand der beigefügten Figuren beschrieben, in denen:
- Fig. 1: eine Schnittansicht einer ersten Ausführungsform einer erfindungsgemäßen Kamera darstellt,
- Fig. 2: eine Explosionsansicht der Kamera der Fig. 1 darstellt, in denen das optische Element außerhalb des Gehäuses angeordnet ist,
- Fig. 3: eine Schnittansicht einer weiteren Ausführungsform einer erfindungsgemäßen Kamera darstellt,

- Fig. 4: eine Schnittansicht einer weiteren Ausführungsform einer erfindungsgemäßen Kamera darstellt,
- Fig. 5: eine Schnittansicht einer weiteren Ausführungsform einer erfindungsgemäßen Kamera darstellt, und
- Fig. 6: eine Schnittansicht einer weiteren Ausführungsform einer erfindungsgemäßen Kamera darstellt.

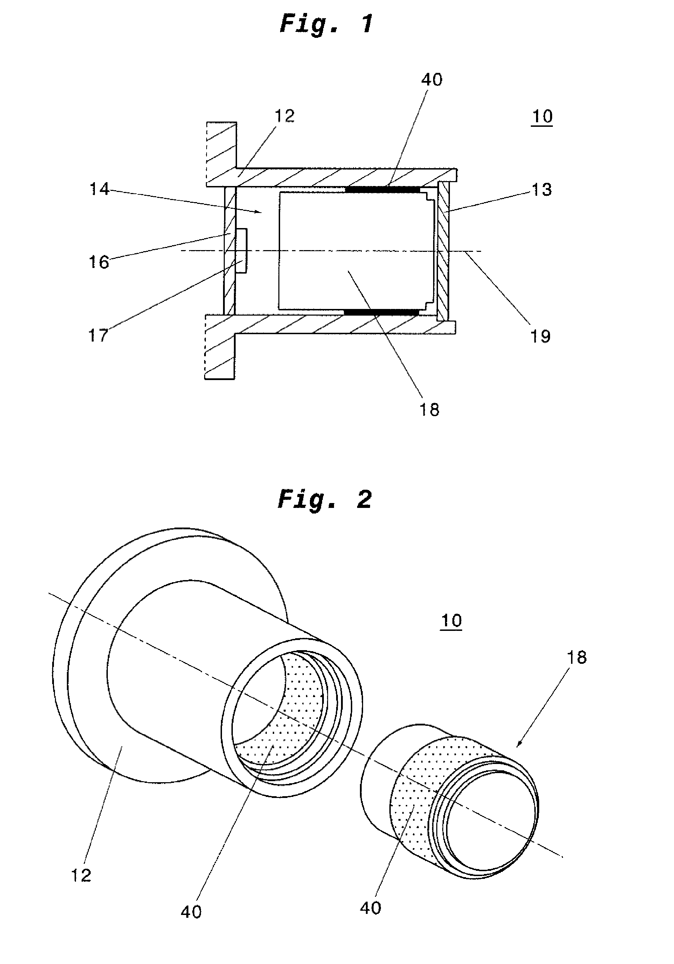

Fig. 1 stellt eine erste Ausführungsform einer erfindungsgemäßen Kamera 10 dar. Die Kamera 10 weist ein Gehäuse 12 auf, das im Inneren einen zylindrischen Aufnahmebereich 14 hat. Das Gehäuse 12 ist linksseitig mit einer gestrichelten Linie unterbrochen dargestellt, da das Gehäuse 12 an dieser Stelle entweder mit z. B. einem Deckel geschlossen werden kann oder sich einstückig weiter erstrecken kann, in dem sich beispielsweise weitere Elektronikbauteile angeordnet befinden können, die jedoch der Einfachheit halber nicht gezeigt ist. Im Gehäuse 12 befindet sich eine Platine 16, auf der zumindest eine digitale Bilderfassungseinheit 17 in Form eines Bildsensors angebracht ist, beispielsweise ein CCD-oder CMOS-Sensor, der lichtempfindliche elektronische Bauelemente enthält, die auf dem inneren Photoeffekt beruhen. Auf der Platine 16 befinden sich weitere elektronische Bauteile, die der Einfachheit halber in den Zeichnungen nicht dargestellt sind.

Im Gehäuse 12 ist ferner ein zylindrisches optisches Element 18, beispielsweise ein Objektiv mit Linsensystem, angeordnet, das mittels einer aktivierten Beschichtung 40 am Gehäuse 12 befestigt ist. Das optische Element 18 ist im Aufnahmebereich 14 des Gehäuses 12 angeordnet. Das zylindrische optische Element 18 ist im Wesentlichen koaxial zum Aufnahmebereich 14. Das Gehäuse 12 ist objektseitig durch ein Deckglas 13 luft- und/oder wasserdicht geschlossen, welches jedoch optional ist. Das optische Element 18 definiert eine optische Achse 19, die bevorzugt durch das Zentrum der digitalen Bilderfassungseinheit 17 verläuft. Bei der Montage des optischen Elements 18 muss das optische Element 18 relativ zur digitalen Bilderfassungseinheit 17 derart angeordnet werden, dass der Abstand zwischen dem optischen Element 18 und der digitalen Bilderfassungseinheit 17, der die Fokussierung festlegt, und die Ausrichtung der optischen Achse 19 relativ zur digitalen Bilderfassungseinheit 17 wie gewünscht vorliegen.

Unter Verweis auf die Fig. 2 ist gezeigt, dass die aktivierte Beschichtung 40 vor der Montage auf das Äußere des optischen Elements 18 und im Gehäuse 12 am Aufnahmebereich 14 angebracht wird. Dabei kann die aktivierte Beschichtung 40 entweder nur teilweise oder über die gesamte Länge auf das optische Element 18 aufgebracht werden. Auch ist anstelle einer vollständig umlaufenden aktivierten Beschichtung 40 ein portionsweises Auftragen der aktivierten Beschichtung 40 auf die das optische Element 18 und den Aufnahmebereich 14 möglich.

Daraufhin wird das optische Element 18 in den Aufnahmebereich 14 des Gehäuses 12 eingebracht, so dass die gewünschte Position relativ zur digitalen Bilderfassungseinheit 17 vorliegt. Aufgrund der Übermaßpassung zwischen dem optischen Element 18 und dem Gehäuse 12 im Aufnahmebereich 14 wird die aktivierte Beschichtung 40 aktiviert, weshalb eine abdichtende und feste Verbindung des optischen Elements 18 am Gehäuse 12 geschaffen wird.

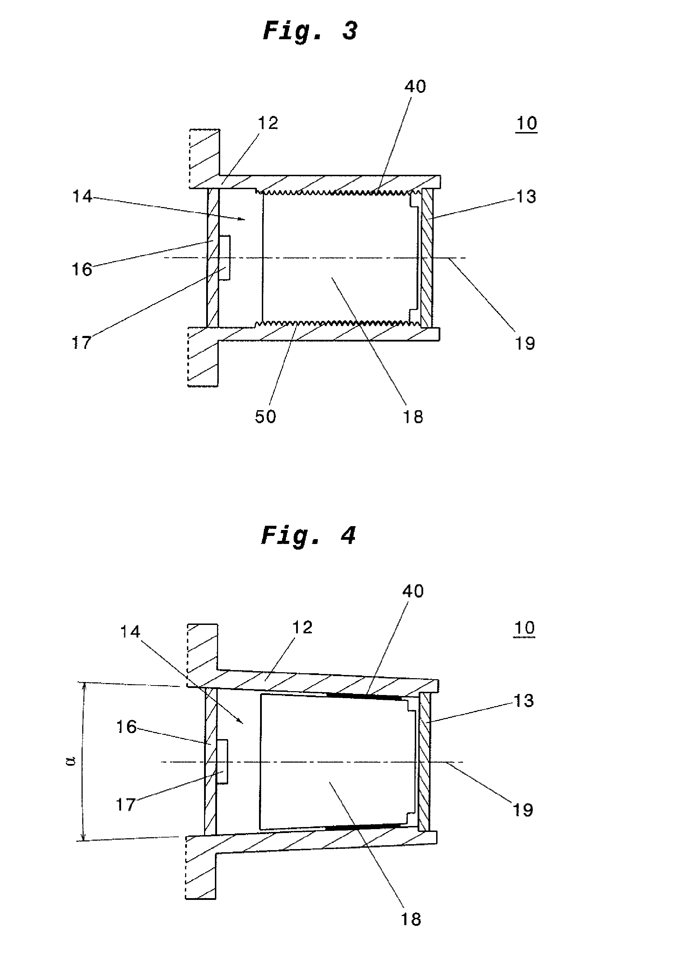

Mit Bezug auf die Fig. 3 ist eine weitere Ausführungsform einer erfindungsgemäßen Kamera 10 gezeigt. Die Kamera 10 der Fig. 3 unterscheidet sich von der Kamera 10 aus der Fig. 1 darin, dass das optische Element 18 in den Aufnahmebereich 14 über ein Gewinde 50 eingeschraubt ist. Die aktivierte Beschichtung 40 wird wiederum vor der Montage auf das Gewinde 50, das am Aufnahmebereich 14 und am optischen Element 18 vorgesehen ist, aufgebracht und erst dann aktiviert, wenn das optische Element 14 in den Aufnahmebereich 30 in der vorbestimmten Position eingeschraubt ist. Dabei wird eine abdichtende Verbindung zwischen dem Gehäuse 12 und dem optischen Element 18 geschaffen.

Die Fig. 4 zeigt eine weitere Ausführungsform einer erfindungsgemäßen Kamera 10. Die Kamera 10 der Fig. 4 unterscheidet sich von der Kamera 10 der Fig. 1 darin, dass sowohl das optische Element 14 als auch der Aufnahmebereich 30 konisch ausgebildet sind. Dabei ist der Kegelwinkel α des konischen optischen Elements 14 und des Aufnahmebereichs 30 bevorzugt nahezu gleich, damit das optische Element 18 mit dem Gehäuse über die aktivierte Beschichtung 40 maximal in Kontakt treten und somit die aktivierte Beschichtung 40 aktivieren.

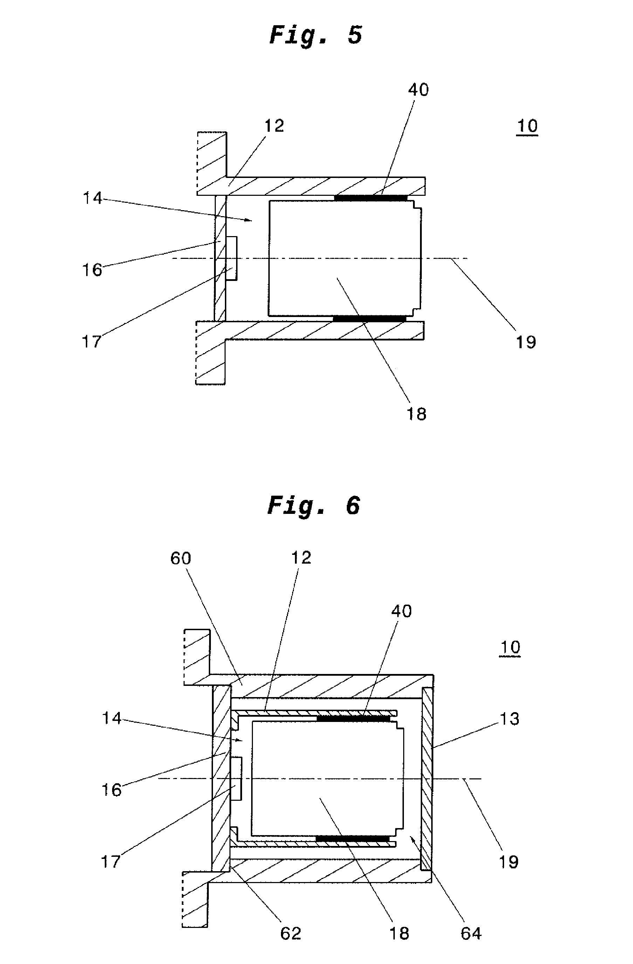

Die Fig. 5 zeigt eine weitere Ausführungsform einer erfindungsgemäßen Kamera 10. Die Kamera 10 der Fig. 5 unterscheidet sich von der Kamera 10 der Fig. 1 darin, dass die Kamera 10 ohne einem Deckglas 13 vorgesehen ist. Somit ist in dieser Ausführungsform die aktivierte Beschichtung 40 ferner dazu angepasst, das optische Element 18 im Gehäuse 12 abdichtend zu positionieren, beispielsweise luft- und/oder wasserdicht.

In der Fig. 6 ist eine weitere Ausführungsform einer erfindungsgemäßen Kamera 10 dargestellt. Die Kamera 10 der Fig. 6 unterscheidet sich von der Kamera 10 der Fig. 1 darin, dass die Kamera 10 ein zusätzliches Kameragehäuse 60 mit einem Aufnahmebereich 64 aufweist, in dem sich eine Haltevorrichtung 12 angeordnet befindet. Die Haltevorrichtung 12 der Fig. 6 ist ähnlich dem Gehäuse 12 der Fig. 1 bis 5 ausgestaltet. Somit ist das optische Element 18 in der Haltevorrichtung 12 über die mit Bezug auf die Fig. 1 bis 5 beschriebene aktivierte Beschichtung 40 in der gewünschten Position relativ zur digitalen Bilderfassungseinheit 16 befestigt. Die Haltevorrichtung 12 ist an der Platine 16, die im Aufnahmebereich 64 angeordnet ist, befestigt, beispielsweise an dieser verklebt, verschraubt, verlötet oder vernietet. Das Kameragehäuse 60 weist zwei zylindrische Bereiche mit jeweils unterschiedlichen Durchmessern auf, so dass ein Flansch 62 vorgesehen ist. An dem Flansch 62 ist die Platine 16 befestigt. Das Deckglas 13 der Fig. 6 schließt das Kameragehäuse 60 objektseitig luft- und/oder wasserdicht. Somit muss die aktivierte Beschichtung 40 zwischen der Haltevorrichtung 12 und dem optischen Element 18 keine Abdichtung bereitstellen.

### Bezugszeichenliste

- 10: Kamera
- 12: Gehäuse
- 13: Deckglas
- 14: Aufnahmebereich
- 16: Platine
- 17: digitale Bilderfassungseinheit
- 18: optisches Element
- 19: optische Achse
- 40: aktivierte Beschichtung
- 50: Gewinde
- 60: Kameragehäuse
- 62: Flansch
- 64: Aufnahmebereich
- α: Kegelwinkel

## Patentansprüche

1. Kamera (10) zur Verwendung an Fahrzeugen, insbesondere Nutzfahrzeugen, mit:
einem Gehäuse (12), das im Inneren einen Aufnahmebereich (14) aufweist,
zumindest einem im Aufnahmebereich (14) angeordneten optischen Element (18), und
einer aktivierten Beschichtung (40), die zwischen dem zumindest einen optischen Element (18) und dem Gehäuse (12) vorgesehen ist, wobei die aktivierte Beschichtung (40) beim Einbauen des zumindest einen optischen Elements (18) in das Gehäuse (12) durch die Reibung und/oder den Flächendruck zwischen dem Gehäuse und dem zumindest einen optischen Element (18) mechanisch aktiviert wird und das zumindest eine optische Element (18) in einer vorbestimmten Position im Gehäuse (12) befestigt.

2. Kamera (10) nach Anspruch 1, wobei die aktivierte Beschichtung eine mikroverkapselte Beschichtung (40), insbesondere ein mikroverkapselter Kleber, ist.

3. Kamera (10) nach Anspruch 1, wobei die aktivierte Beschichtung eine bei Aktivierung einer Volumenänderung unterzogene Beschichtung (40), insbesondere eine aufschäumende Beschichtung, ist.

4. Kamera (10) nach einem der vorhergehenden Ansprüche, wobei der Aufnahmebereich (14) und das zumindest eine optische Element (18) derart ausgestaltet sind, dass nach Aufbringen der aktivierten Beschichtung (40) zwischen dem Gehäuse (12) und dem zumindest einen optischen Element (18) im Wesentlichen eine Übermaßpassung zur mechanischen Aktivierung der aktivierten Beschichtung (40) vorliegt.

5. Kamera (10) nach einem der Ansprüche 1 bis 3, wobei der Aufnahmebereich (14) und das zumindest eine optische Element (18) konisch ausgestaltet sind, wobei der konische Aufnahmebereich (14) und das zumindest eine konische optische Element (18) einen im Wesentlichen gleichen Kegelwinkel (α) aufweisen.

6. Kamera (10) nach einem der Ansprüche 1 bis 3, wobei das zumindest eine optische Element (18) in den Aufnahmebereich (14) über ein Gewinde (50) eingeschraubt ist.

7. Kamera (10) nach einem der vorhergehenden Ansprüche, ferner mit einer im Gehäuse (12) angeordneten digitalen Bilderfassungseinheit (17).

8. Kamera (10) nach einem der vorhergehenden Ansprüche, wobei das zumindest eine optische Element (18) in der vorbestimmten Position im Gehäuse (12) abdichtend befestigt ist.

9. Kamera (10) nach einem der vorhergehenden Ansprüche, wobei das Gehäuse eine Haltevorrichtung (12) ist, die in einem Aufnahmebereich (64) eines zusätzlichen Kameragehäuses (60) angeordnet ist.

10. Kamera (10) nach Anspruch 9, ferner mit einer Platine (16), die im Aufnahmebereich (64) des Kameragehäuses (60) angeordnet ist, wobei die Haltevorrichtung (12) an der Platine (16) befestigt ist.

11. Verfahren zum Befestigen von zumindest einem optischen Element (18) in einem Aufnahmebereich (14) eines Gehäuses (12) einer Kamera (10) für Fahrzeuge, insbesondere Nutzfahrzeuge, mit den Schritten:
Aufbringen einer aktivierbaren Beschichtung (40) auf das zumindest eine optische Element (18) und/oder den Aufnahmebereich (14),
Positionieren des zumindest einen optischen Elements (18) im Aufnahmebereich (14), und
mechanisches Aktivieren der aktivierbaren Beschichtung (40) durch die Reibung und/oder den Flächendruck zwischen dem Gehäuse und dem zumindest einen optischen Element (18) beim Einbauen des zumindest einen optischen Elements (18) in das Gehäuse (12) zum Befestigen des zumindest einen optischen Elements (18) im Aufnahmebereich (14) des Gehäuses (12).

12. Verfahren nach Anspruch 11, wobei die aktivierbare Beschichtung eine mikroverkapselte Beschichtung (40), insbesondere ein mikroverkapselter Kleber, ist und die Kapseln der mikroverkapselten Beschichtung (40) bei Aktivierung aufbrechen.

13. Verfahren nach Anspruch 12, wobei beim Aufbrechen der Kapseln ein Dicht- und Sicherungsmittel polymerisiert, aushärtet und/oder austrocknet.

14. Verfahren nach Anspruch 11, wobei die Beschichtung (40) bei Aktivierung einer Volumenänderung, insbesondere einer Aufschäumung, unterliegt und das zumindest eine optische Element (18) im Aufnahmebereich (14) des Gehäuses (12) verspannt und befestigt wird.

15. Verfahren nach einem der Ansprüche 11 bis 14, wobei die Schritte des Positionierens des zumindest einen optischen Elements (18) und des Aktivierens der aktivierbaren Beschichtung (40) zeitgleich erfolgen.
